# EUROPÄISCHE PATENTSCHRIFT

(11) **EP 2 067 603 B1**
(45) Veröffentlichungstag und Bekanntmachung des Hinweises auf die Patenterteilung: **13.02.2013**
(21) Anmeldenummer: 08017775.1
(22) Anmeldetag: 10.10.2008
(51) Int. Cl.: B29C 63/00, A47B 96/18, B27D 5/00, B32B 38/10

(54) **Verfahren zur Versiegelung eines plattenförmigen Werkstoffsubstrats**
Method for sealing a panel substrate
Procédé de scellement d'un substrat en forme de plaque

(30) Priorität: 04.12.2007 DE 102007058478; 15.12.2007 DE 102007061076
(43) Veröffentlichungstag der Anmeldung: 10.06.2009
(73) Patentinhaber: Jowat AG, 32758 Detmold (DE)
(72) Erfinder: Schmolke, Maik, 33415 Verl (DE); Palluch, Manfred, 32758 Detmold (DE); Sonnenberg, Jürgen, 32758 Detmold (DE)
(74) Vertreter: Von Rohr

(56) Entgegenhaltungen:
- EP-A- 0 143 882
- EP-A- 0 951 978
- DE-A1- 3 810 053
- DE-U1- 29 502 715
- DE-U1- 29 503 675
- US-A- 5 667 867
- US-A1- 2005 133 145

## Beschreibung

Die vorliegende Erfindung betrifft ein Verfahren zur Versiegelung eines Kanten- bzw. Übergangsbereichs von vorzugsweise beschichteten Werkstoffsubstraten, insbesondere von Küchen- bzw. Arbeitsplatten. Auf diese Weise sind plattenförmige Werkstoffteile, insbesondere in Form von Küchen- bzw. Arbeitsplatten, erhältlich, welche im Bereich der Möbelindustrie, insbesondere zur Herstellung von Möbeln, wie Küchenzeilen oder dergleichen, verwendet werden können.

Für die Herstellung von Küchen- bzw. Arbeitsplatten werden im Stand der Technik oftmals plattenförmige Holzwerkstoffsubstrate, insbesondere plattenförmige Holzwerkstoffteile, wie Massivholzplatten, Spanplatten oder MDF-Platten (MDF = Mitteldichte Faserplatte bzw. Medium Density Fiberboard) eingesetzt. Derartige plattenförmige Werkstoffteile werden sowohl aus optischen Gründen als auch zur Gewährleistung einer gewissen Widerstandsfähigkeit gegenüber äußeren Einflußfaktoren, wie mechanischen Beanspruchungen, Wärme und/oder Feuchtigkeit, sowohl auf der Flachseite des Werkstoffteils, welche den eigentlichen Arbeitsbereich darstellt, als auch auf der Schmalseite mit zumeist kunststoffbasierten Folien bzw. Profilen beschichtet bzw. ausgerüstet. Dabei kann es im Stand der Technik zudem vorgesehen sein, die der Arbeitsseite abgewandte Flachseite im Übergangsbereich zum Profil der Schmalseite mit einer Beschichtung bzw. einer Versiegelung auszurüsten, um auf diese Weise hinsichtlich des oftmals kritischen Übergangsbereichs einen gewissen Schutz vor hohen Temperaturen und vor dem Einfluß von Wasser, insbesondere in Form von Luftfeuchtigkeit, zu ermöglichen. Derartige Expositionen treten dabei insbesondere im Bereich von Küchenarbeitsgeräten, wie im Bereich des Herdes oder der Spülmaschine, auf. Auf diese Weise soll sozusagen durch die Versiegelung auf der Unterseite der Arbeitsplatte ein Einwandern von Wasser in die Arbeitsplatte verhindert werden. Küchen- bzw. Arbeitsplatten werden somit besonders durch untergebaute Spülmaschinen und Herde Belastungen durch feucht-heiße Dämpfe ausgesetzt, welche die Holzwerkstoffplatte schädigen und beispielsweise zur Ablösung von Dekorkanten führen können.

Dabei ist es im Stand der Technik vorgesehen, daß an der Schmalseite anzubringende Profil einerseits und die auf der Flachseite anzubringende Versiegelung andererseits im Bereich einer Kante des plattenförmigen Werkstoffteils, also gewissermaßen im Übergangsbereich zwischen Flachseite und Schmalseite, aufeinanderstoßen zu lassen. Die resultierende Kontaktfläche zwischen dem Profil einerseits und der Versiegelung andererseits ist dabei flächenmäßig oftmals sehr klein, und es resultieren häufig Probleme hinsichtlich der Stabilität und Dauerhaftigkeit dieser Kontaktfläche, insbesondere wenn das Profil aus Polypropylen hergestellt ist, welches nicht ohne spezielle Vorbehandlungsmethoden mit den oftmals für die Versiegelung eingesetzten Polyurethanschmelzklebstoffen kleb- bzw. benetzbar ist. Im Stand der Technik resultiert in diesem Zusammenhang oftmals im Kantenbereich eine nur wenig widerstandsfähige Verbindung zwischen Profil einerseits und Versiegelung andererseits, so daß es bei den Küchen- bzw. Arbeitsplatten des Standes der Technik in dem Bereich zwischen dem aufgebrachten Profil und der angrenzenden Versiegelung auf der Unterseite zum Eindringen von Wasser bzw. Feuchtigkeit kommt, was zu einer weiteren Delaminierung der Beschichtung bzw. des Profils und zur Zerstörung der Arbeitsplatte führen kann.

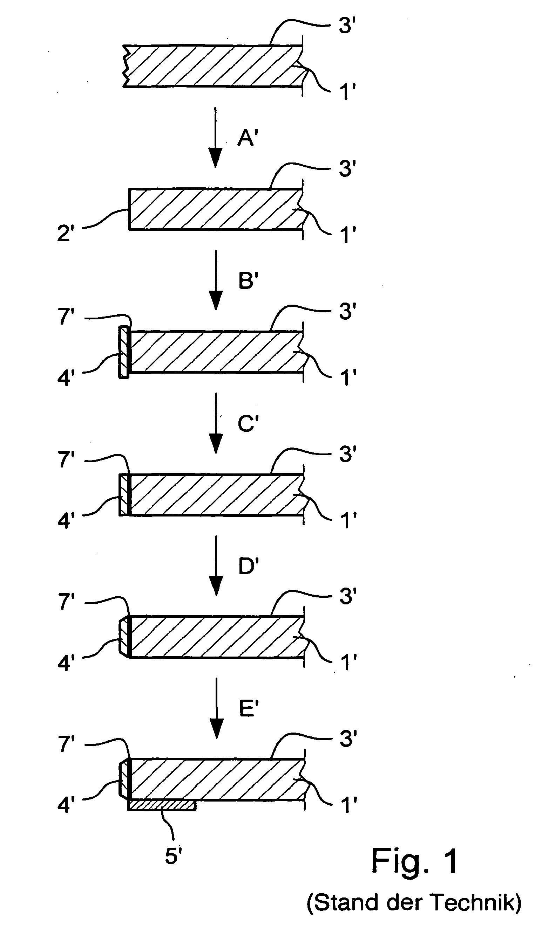

Fig. 1 verdeutlicht ein entsprechendes Verfahren des Standes der Technik, wonach in einem ersten Schritt A' ein plattenförmiges Werkstoffsubstrat 1' mit einer Flachseite 3' zunächst zur Ausbildung einer Schmalseite 2' formatiert wird. Es resultiert eine gerade bzw. glatte Schmalseite 2' mit jeweils rechtwinkligen Kanten. In einem zweiten Arbeitsschritt B' wird dann auf die formatierte Schmalseite 2' ein Profil 4' mittels eines Klebstoffes 7' geklebt, wobei zur Verbesserung der Klebeigenschaften das Profil 4' zuvor mit einem Haftvermittler ausgerüstet bzw. beschichtet sein kann. In einem Schritt C' erfolgt dann zumeist eine Angleichung der mitunter über das Werkstoffsubstrat 1' hinausstehenden Enden des Profils 4', so daß das Profil 4' bündig an dem plattenförmigen Werkstoffsubstrat 1' anliegt. In einem nächsten Schritt D' erfolgt dann eine Formgebung der Endbereiche des Profils 4'. In einem abschließenden Schritt E' wird dann auf die Flachseite 3' des Werkstoffteils 1', welche im Gebrauchszustand gewissermaßen die Unterseite der resultierenden Küchen- bzw. Arbeitsplatte darstellt, eine Versiegelung 5' aufgebracht, welche im Bereich der Schmalkante 2' an das Profil 4' anstößt.

Wie Fig. 1 weiter verdeutlicht, wird nach den Verfahren gemäß dem Stand der Technik nur eine sehr kleine Kontaktfläche bzw. Klebefläche zwischen Profil 4' einerseits und Versiegelung 5' andererseits ermöglicht, welche aufgrund der zuvor beschriebenen Problematik hinsichtlich der oftmals mangelnden Kompatibilität zwischen Profil 4' einerseits und Versiegelungsmasse 5' andererseits nicht stabil ausgebildet ist, so daß es im Stand der Technik oftmals zum Eindringen von Feuchtigkeit in dem Bereich zwischen dem Profil 4' und der Versiegelung 5' kommt, was zu einer Zerstörung, beispielsweise in Form von Delaminierung des Profils und Aufquellen der Kernsubstanz der Arbeitsplatte führen kann.

Weiterhin sind im Stand der Technik Küchen- bzw. Arbeitsplatten bekannt, welche mittels eines sogenannten Postformingverfahrens hergestellt werden, bei denen mit einer Leimfuge auf der Arbeitsplattenunterseite gearbeitet wird. Dabei wird das Ende des in einem mehr oder weniger großen Radius über die Schmalseite der Platte hinweggezogenen Beschichtungsmaterials mittels einer Klebstoffraupe in einer zuvor gefrästen Nut versiegelt. Auch derartige Verfahren des Standes der Technik führen nicht immer zu einer dauerhaften Widerstandsfähigkeit gegenüber Wärme und Feuchtigkeit. Zudem weisen derartigen Küchen- bzw. Arbeitsplatten im Bereich der Schmalseite und somit im Bereich der Vorderseite nicht immer eine erforderliche Stabilität gegenüber mechanischen Einflüssen auf, da die Vorderseite gerade nicht mit einem verstärkenden Profil beschichtet wird.

Die EP 0 951 978 A1 betrifft eine Arbeits- oder Abdeckplatte mit einer Kernplatte sowie einem die Randkanten der Kernplatte abdeckenden Rahmenprofil, welches die Oberseite der Kernplatte im Randbereich übergreift. Der den Randbereich der Kernplatte übergreifende Schenkel des Rahmenprofils ist U-förmig nach unten offen ausgebildet, wobei in das nach unten offene U-Profil eine Klebstoffraupe oder ein Klebstoffband eingelegt ist. In dem Bereich der unteren Kante der Kernplatte und der Innenseite des nach unten gerichteten Schenkels des Rahmenprofils ist gleichfalls eine Klebstoffraupe oder ein Klebstoffband angebracht.

Somit besteht insgesamt im Stand der Technik ein großer Bedarf an Küchen- bzw. Arbeitsplatten, welche über eine verbesserte Widerstandsfähigkeit bzw. Resistenz gegenüber Wärme- bzw. Feuchtigkeitseinflüssen insbesondere im Bereich des Übergangs zwischen einem auf einer Schmalseite aufgebrachten Profil einerseits und einer auf der Unterseite der Küchen- bzw. Arbeitsplatte aufgebrachten Versiegelung andererseits verfügen.

Der vorliegenden Erfindung liegt daher die Aufgabe zugrunde, ein Verfahren bereitzustellen, welches sich zur Versiegelung bzw. Abdichtung des Übergangsbereichs zwischen einem auf einer Schmalseite einer Arbeitsplatte aufgebrachten Profil einerseits und einer auf der Flach- bzw. Unterseite der Arbeitsplatte aufgebrachten Versiegelung andererseits eignet und dabei insbesondere die zuvor geschilderten Nachteile des Standes der Technik zumindest weitgehend vermeidet oder aber wenigstens abschwächt.

Eine weitere Aufgabe der vorliegenden Erfindung ist die Bereitstellung eines Verfahrens zur Versiegelung bzw. Abdichtung eines Übergangsbereichs zwischen einem auf einer Schmalseite eines plattenförmigen Werkstoffsubstrats aufzubringenden Profil einerseits und einer auf einer Flachseite bzw. Unterseite des Werkstoffsubstrats aufzubringenden Versiegelung andererseits bereitzustellen, welches zu einer dauerhaften und effektiven Verbindung bzw. Versiegelung bzw. Abdichtung in diesem Bereich führt, welche auch unter widrigen Verhältnissen, insbesondere im Einsatzbereich der resultierenden Küchen- bzw. Arbeitsplatten, zu einer effektiven Verhinderung des Eindringens von Feuchtigkeit in die Küchen- bzw. Arbeitsplatte führt, wobei das Verfahren unter Verwendung herkömmlicher Vorrichtungen einfach zu realisieren und kostengünstig sein soll.

Zielrichtung der vorliegenden Erfindung ist somit zum einen die Bereitstellung widerstandsfähiger plattenförmiger Werkstoffteile, welche insbesondere in Form von Küchen- bzw. Arbeitsplatten eingesetzt werden sollen und welche in hohem Maße gegenüber dem Einfluß von Wärme und Feuchtigkeit resistent und zum anderen zudem einfach und somit kostengünstig herzustellen sein sollen.

Die zuvor geschilderte Aufgabenstellung wird erfindungsgemäß durch ein Verfahren gemäß Anspruch 1 gelöst. Weitere, vorteilhafte Weiterbildungen und Ausgestaltungen sind Gegenstand der Verfahrensunteransprüche.

Es versteht sich von selbst, daß Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in bezug auf die übrigen Erfindungsaspekte entsprechend gelten.

Gegenstand der vorliegenden Erfindung ist somit ein Verfahren zur Versiegelung eines Übergangsbereichs zwischen einem an einer Schmalseite eines plattenförmigen Werkstoffsubstrats aufzubringenden Kunststoffprofil und einer an einer Flachseite des plattenförmigen Werkstoffsubstrats aufzubringenden Versiegelungsmasse, wobei das plattenförmige Werkstoffsubstrat im Übergangsbereich mit einer Abkantung versehen wird und die Abkantung mit der Versiegelungsmasse verfüllt wird, wobei das Kunststoffprofil vor dem Aufbringen auf die Schmalseite auf der auf die Schmalseite aufzubringende Seite des Kunststoffprofils mit einem Haftvermittler versehen wird und wobei das Kunststoffprofil nach Einbringen der Abkantung und vor Verfüllung der Abkantung mit der Versiegelungsmasse auf die Schmalseite aufgebracht wird.

Eine grundlegende Idee der vorliegenden Erfindung ist somit darin zu sehen, daß die durch die Schmalseite und die Flachseite des plattenförmigen Werkstoffsubstrats ausgebildete Kante mit einer Abkantung bzw. Aussparung versehen wird und diese Aussparung - wie nachfolgend noch ausführlich geschildert - mit einer Versiegelungsmasse verfüllt bzw. aufgefüllt wird, so daß auf diese Weise gewissermaßen die Kontaktfläche zwischen einem zuvor auf der Schmalseite aufgebrachten Kunststoffprofil und der Versiegelungsmasse an sich vergrößert wird, so daß insgesamt eine gegenüber dem Stand der Technik signifikant verbesserte Kontakt- bzw. Verbindungsfläche zwischen dem Kunststoffprofil einerseits und der Versiegelungsmasse andererseits resultiert. Folglich können mit Hilfe des erfindungsgemäßen Verfahrens plattenförmige Werkstoffteile erhalten werden, welche insbesondere in Form von Küchen- bzw. Arbeitsplatten vorliegen und welche über eine hervorragende Widerstandsfähigkeit gegenüber dem Einfluß von Feuchtigkeit bzw. Wärme verfügen und daher auch unter widrigen Einsatzbedingungen mit einhergehender Exposition von Wärme und/oder Feuchtigkeit nicht zur Zerstörung bzw. Delaminierung neigen. Dabei zeichnet sich das erfindungsgemäße Verfahren zudem dadurch aus, daß es äußerst einfach mit herkömmlichen Werkzeugen bzw. Bearbeitungsvorrichtungen und unter Verwendung herkömmlicher Ausgangsmaterialien für Küchen- bzw. Arbeitsplatten durchgeführt werden kann, so daß insgesamt leistungsfähige und zugleich kostengünstige Endprodukte resultieren. Mit anderen Worten können hinsichtlich des erfindungsgemäßen Verfahrens die bereits im Stand der Technik bekannten Ausgangsmaterialien, insbesondere was das plattenförmige Werkstoffsubstrat als solches, das Kunststoffprofil sowie die Versiegelungsmasse betrifft, eingesetzt werden, die mittels des erfindungsgemäßen Verfahrens zu neuen Endprodukten mit gegenüber dem Stand der Technik signifikant verbesserten Eigenschaften verarbeitet werden können.

Weitere Vorteile, Merkmale, Eigenschaften und Aspekte der vorliegenden Erfindung ergeben sich aus der folgenden Beschreibung einer bevorzugten Ausführungsform des erfindungsgemäßen Verfahrens anhand der Zeichnung. Es zeigt:
- Fig. 1: eine schematische Darstellung des Verfahrensablaufs gemäß dem zuvor geschilderten Stand der Technik, welcher zu Vergleichszwecken veranschaulicht ist. Die einzelnen Darstellungen gemäß Fig. 1 stellen eine Querschnittsdarstellung der jeweils eingesetzten Komponenten dar;
- Fig. 2: eine schematische Darstellung des Verfahrensablaufs gemäß der vorliegenden Erfindung. Die einzelnen Darstellungen gemäß Fig. 2 stellen eine Querschnittsdarstellung der jeweils eingesetzten Komponenten dar.

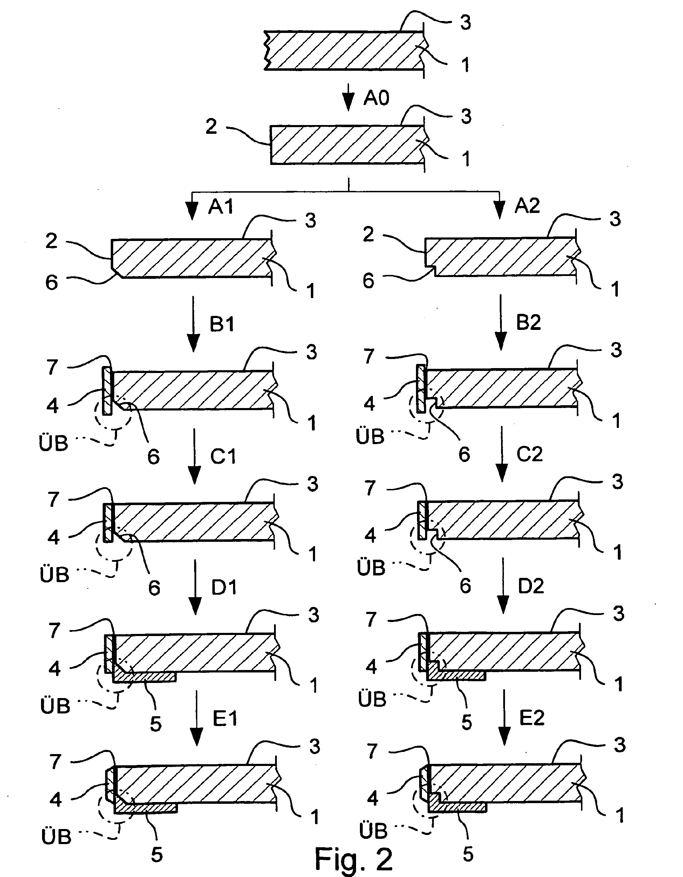

Fig. 2 zeigt schematisch den Ablauf des erfindungsgemäßen Verfahrens zur Versiegelung eines Übergangsbereichs ÜB zwischen einem an einer Schmalseite 2 eines plattenförmigen Werkstoffsubstrats 1 aufzubringenden Kunststoffprofil 4 und einer an einer Flachseite 3 des plattenförmigen Werkstoffsubstrats 1 aufzubringenden Versiegelungsmasse 5, wobei das Werkstoffsubstrat 1 im Übergangsbereich ÜB mit einer Abkantung 6 versehen wird und die Abkantung 6 mit der Versiegelungsmasse 5 verfüllt wird.

Im Rahmen der vorliegenden Erfindung bezieht sich der Begriff "Schmalseite" auf die Stirnseite des plattenförmigen Werkstoffsubstrats 1, wobei es sich hierbei im Gebrauchszustand der resultierenden Küchen- bzw. Arbeitsplatte insbesondere um die vordere, dem Benutzer gewissermaßen zugewandte Seite der Küchen- bzw. Arbeitsplatte handelt.

Im Rahmen der vorliegenden Erfindung bezieht sich zudem der Begriff "Flachseite" des plattenförmigen Werkstoffsubstrats 1 auf die flächenmäßig größere Seite bzw. Fläche des plattenförmigen Werkstoffsubstrats 1, wobei diesbezüglich insbesondere in bezug auf die aufzubringende Versiegelungsmasse 5 die im Gebrauchszustand der resultierenden Küchen- bzw. Arbeitsplatte gewissermaßen untenliegende Seite gemeint ist, also diejenige Seite, welche einem darunter befindlichen Küchenunterbau mitsamt den Küchengeräten, wie beispielsweise Herd oder Spülmaschine, zugewandt ist.

Im Rahmen der vorliegenden Erfindung wird unter dem Begriff "Übergangsbereich" insbesondere der Bereich des durch die Schmalseite 2 und die Flachseite 3 des plattenförmigen Werkstoffsubstrats 1 gebildeten Übergangs verstanden, wobei zu diesem Übergangsbereich ÜB auch die aufeinanderstoßenden bzw. aneinander angrenzenden Endbereiche des auf die Schmalseite 2 aufzubringenden Kunststoffprofils 4 und der auf die Flachseite 3 aufzubringenden Versiegelungsmasse 5 gezählt werden. Der Übergangsbereich ÜB stellt somit sozusagen den Eck- bzw. Kantenbereich mit der Schmalseite 2 und der Flachseite 3 des plattenförmigen Werkstoffsubstrats 1 dar. Der Übergangsbereich ÜB befindet sich im Gebrauchszustand der resultierenden Küchen- bzw. Arbeitsplatte insbesondere auf deren vorderen Unterseite, welche zu den Unterbaugeräten, wie Herd, Spüle oder dergleichen, orientiert ist. Der Übergangsbereich ÜB ist in Fig. 2 schematisch durch die strichpunktförmig dargestellten Kreise gekennzeichnet.

Was das erfindungsgemäße Verfahren weiterhin anbelangt, so zeigt Fig. 2 die in einem ersten fakultativen Schritt erfolgende Bearbeitung des plattenförmigen Werkstoffsubstrats 1, wobei der diesbezügliche Schritt A0 das Formatieren des plattenförmigen Werkstoffsubstrats 1 an dessen Schmalseite 2 verdeutlicht. Durch entsprechende, dem Fachmann wohlbekannte Bearbeitungsschritte erfolgt hierbei sozusagen ein Glätten der Schmalseite 2, wobei eine zumindest im wesentlichen ebene Fläche in bezug auf die Schmalseite 2 und zumindest im wesentlichen rechtwinklige Kanten zu den jeweiligen Flachseiten 3 des plattenförmigen Werkstoffsubstrats 1 resultieren.

Der nachfolgende Verfahrensschritt A1 bzw. A2 gemäß Fig. 2 verdeutlicht das Einbringen der Abkantung 6, welche synonym auch als Aussparung bzw. Fuge bezeichnet werden kann. Die Abkantung 6 verläuft dabei sozusagen längs der aus Schmalseite 2 und Flachseite 3 gebildeten Kante in Form einer Aussparung, so daß die ursprünglich zwischen Schmalseite 2 und Flachseite 3 gebildete Kante durch Abkantung ausgespart bzw. abgetragen wird. Wie zuvor geschildert, befindet sich die Abkantung 6 in bezug auf die resultierende Küchen- bzw. Arbeitsplatte in deren Gebrauchszustand vorzugsweise sozusagen im Bereich zwischen der vorderen Stirnseite und der unteren, dem Küchenunterbau zugeordneten Flachseite der Küchen- bzw. Arbeitsplatte.

Was die Abkantung 6 weiterhin anbelangt, so kann sich diese zumindest im wesentlichen über die gesamte Länge des Werkstoffsubstrats 1 erstrecken. Gleichermaßen ist es im Rahmen der vorliegenden Erfindung auch möglich, daß sich die Abkantung 6 nur abschnittsweise über die Länge des Werkstoffsubstrats 1 erstreckt. In diesem Zusammenhang kann die Abkantung 6 beispielsweise derart in das plattenförmige Werkstoffsubstrat 1 eingebracht werden, daß sich die Abkantung 6 im Gebrauchszustand beispielsweise nur im Bereich einer Wärme- bzw. Feuchtigkeitsquelle befindet, beispielsweise nur im Bereich des Herdes bzw. der Spülmaschine. Das Einbringen der Abkantung 6 kann in dem Fachmann an sich bekannter Art und Weise, beispielsweise mittels Fräsen, Feilen, Hobeln oder dergleichen erfolgen, so daß es diesbezüglich keiner weiteren Ausführungen bedarf.

Was die Abkantung 6 zudem anbelangt, so kann diese - wie in Schritt A2 gemäß Fig. 2 gezeigt - einen zumindest im wesentlichen rechteckigen, insbesondere quadratischen Querschnitt oder - wie in Schritt A1 gemäß Fig. 2 gezeigt - einen zumindest im wesentlichen dreieckigen oder zumindest im wesentlichen kreissektorförmigen Querschnitt aufweisen. Mit anderen Worten kann es erfindungsgemäß somit vorgesehen sein, die Kante zwischen der Schmalseite 2 und der Flachseite 3 des plattenförmigen Werkstoffsubstrats 1 sozusagen abzukanten, auszusparen, abzuschrägen oder abzurunden.

Was die Ausmaße der Abkantung 6 anbelangt, so kann es erfindungsgemäß vorgesehen sein, daß sich die Abkantung 6 über 1 bis 50 %, insbesondere 2 bis 40 %, vorzugsweise 3 bis 30 %, bevorzugt 5 bis 25 %, besonders bevorzugt 5 bis 20 %, der Höhe der Schmalseite 2 erstreckt. Zudem sollte die Abkantung 6 ausgebildet sein derart, daß sich die Abkantung 6 über 0,1 bis 20 %, insbesondere 0,5 bis 10 %, vorzugsweise 0,75 bis 7,5 %, bevorzugt 1 bis 5 %, der Breite der Flachseite 3 erstreckt.

Weiterhin kann es erfindungsgemäß vorgesehen sein, daß die Abkantung 6 eine Seitenlänge in Richtung der Schmalseite 2 und/oder eine Seitenlänge in Richtung der Flachseite 3, unabhängig voneinander, von 0,1 bis 100 mm, insbesondere 0,2 bis 50 mm, vorzugsweise 0,4 bis 25 mm, bevorzugt 0,6 bis 20 mm, besonders bevorzugt 0,8 bis 15 mm, ganz besonders bevorzugt 1 bis 10 mm, aufweist. Im Rahmen der vorliegenden Erfindung ist es gleichermaßen möglich, von den zuvor genannten Werten abzuweichen, sofern dies einzelfallbezogen bzw. anwendungsspezifisch erforderlich ist. Der Fachmann ist jederzeit in der Lage, die entsprechenden Ausmaße der Aussparung vor dem Hintergrund der Gewährleistung einer effektiven Versiegelung des Übergangsbereichs ÜB auszuwählen bzw. anzupassen.

Durch das Einbringen der Abgrenzung 6 in das plattenförmige Werkstoffsubstrat 1 resultiert sozusagen vor dem Aufbringen des Kunststoffprofils 4 bzw. der Bekantung mit dem Kunststoffprofil 4 eine definierte Fuge bzw. Vertiefung in dem plattenförmigen Werkstoffsubstrat 1, die zum späteren Ausfüllen bzw. Auffüllen mit der Versiegelungsmasse 5 dient. Diesbezüglich wird sozusagen ein definiertes Profil in das plattenförmige Werkstoffsubstrat 1 eingebracht, und zwar in den Kantenbereich zwischen der Schmalseite 2 und der Flachseite 3. Die Abkantung 6 kann in diesem Zusammenhang beispielsweise auch in Form einer Falz oder Fase ausgebildet sein.

Im Rahmen der vorliegenden Erfindung ist es in diesem Zusammenhang gelungen, sozusagen durch eine gezielte Bearbeitung der Kante zwischen Schmalseite 2 und Flachseite 3 des plattenförmigen Werkstoffsubstrats 1 eine Struktur zu schaffen, welche einer nachfolgenden Aufnahme einer Versiegelungsmasse 5 dient, um so in bezug auf das fertiggestellte Produkt eine dauerhafte Versiegelung im Übergangsbereich ÜB zu gewährleisten.

Was das gemäß dem erfindungsgemäßen Verfahren verwendete plattenförmige Werkstoffsubstrat 1 anbelangt, so kann es sich hierbei gemäß einer erfindungsgemäß bevorzugten Ausführungsform um ein Holzwerkstoffsubstrat, insbesondere eine Massivholzplatte, eine Spanplatte, eine MDF-Platte, eine Leichtbauplatte oder dergleichen, handeln. Gleichermaßen ist es im Rahmen der vorliegenden Erfindung möglich, daß das plattenförmige Werkstoffsubstrat 1 ein Holzprofil ist.

Zudem kann das in dem erfindungsgemäßen Verfahren eingesetzte Werkstoffsubstrat 1 an zumindest einer der Flachseiten 3 eine Beschichtung bzw. ein Dekor, insbesondere in Form einer Kunststoffolie oder eines Furniers, vorzugsweise einer Kunststoffolie, aufweisen. Das Aufbringen einer derartigen Beschichtung erfolgt dabei insbesondere zu Zwecken der späteren Verwendung des nach dem erfindungsgemäßen Verfahren hergestellten Werkstoffteils als Küchen- bzw. Arbeitsplatte. Auf diese Weise kann das erfindungsgemäß verwendete Werkstoffsubstrat 1 mit definierten mechanischen und optischen Oberflächeneigenschaften ausgerüstet werden. Vorzugsweise ist dabei die der Abkantung 6 gegenüberliegende Flachseite, welche im Gebrauchszustand der resultierenden Küchen- bzw. Arbeitsplatte sozusagen die eigentliche Arbeitsfläche ausbildet, mit einer derartigen Beschichtung versehen. Gleichermaßen ist es aber auch möglich, daß die sozusagen untere Flachseite 3, an welcher auch die Abkantung 6 angeordnet ist, mit einer Beschichtung, beispielsweise in Form eines Papiers oder einer Pappe, ausgerüstet ist.

Was die Abmessungen des Werkstoffsubstrats 1 an sich anbelangt, so kann die Schmalseite 2 des Werkstoffsubstrats 1 eine Höhe von 0,1 bis 15 cm, insbesondere 0,5 bis 12,5 cm, vorzugsweise 1 bis 10 cm, bevorzugt 1,5 bis 7,5 cm, besonders bevorzugt 3 bis 6 cm, aufweisen.

Gleichermaßen kann es erfindungsgemäß vorgesehen sein, daß die Flachseite 3 des Werkstoffsubstrats 1 eine Breite von 1 bis 200 cm, insbesondere 5 bis 150 cm, vorzugsweise 10 bis 125 cm, bevorzugt 20 bis 100 cm, besonders bevorzugt 40 bis 90 cm, aufweist.

Bei den Abmessungen hinsichtlich des erfindungsgemäß verwendeten Werkstoffsubstrats 1 kann es sich im allgemeinen um für Küchen- bzw. Arbeitsplatten übliche Maße handeln. Einzelfallbedingt bzw. anwendungsbezogen kann von den obigen Abmessungen abgewichen werden, ohne den Rahmen der Erfindung zu verlassen.

Wie in den Schritten B 1 bzw. B2 gemäß Fig. 2 dargestellt, ist es erfindungsgemäß bevorzugt, daß insbesondere nachfolgend, also nach Einbringen der Abkantung 6, das Kunststoffprofil 4 auf die Schmalseite 2 des plattenförmigen Werkstoffsubstrats 1 aufgebracht wird.

In diesem Zusammenhang kann das Kunststoffprofil 4 zumindest im wesentlichen dieselbe Höhe wie die Schmalseite 2 des Werkstoffsubstrats 1 aufweisen. Gleichermaßen kann es erfindungsgemäß vorgesehen sein, daß das Kunststoffprofil 4 zumindest geringfügig höher ausgebildet ist als die Schmalseite 2, wie in den Verfahrensschritten B1 und B2 gemäß Fig. 2 schematisch dargestellt ist. Dies hat den Vorteil, daß es nicht erforderlich ist, das Kunststoffprofil 4 mit einer exakten Ausrichtung auf die Schmalseite 2 aufzubringen. Vielmehr kann eine gewisse Ungleichmäßigkeit hinsichtlich der Ausrichtung des Kunststoffprofils 4 entlang der Schmalseite 2 durch das Überstehen des Kunststoffprofils 4 kompensiert werden. Diesbezüglich sollte nach Anbringung des Kunststoffprofils 4 eine entsprechende Kantenbearbeitung des Kunststoffprofils 4 erfolgen, wie in den Verfahrensschritten C 1 und C2 gemäß Fig. 2 dargestellt. Dies kann beispielsweise durch ein bündiges Fräsen der Kanten des Kunststoffprofils 4 erfolgen.

In diesem Zusammenhang sollte das Kunststoffprofil 4 eine Höhe von 0,2 bis 16 cm, insbesondere 0,6 bis 13,5 cm, vorzugsweise 1,2 bis 11 cm, bevorzugt 1,7 bis 8,5 cm, besonders bevorzugt 3,2 bis 7 cm, aufweisen. Was die Dicke des Kunststoffprofils 4 anbelangt, so sollte diese 0,1 bis 10 mm, insbesondere 0,5 bis 5 mm, vorzugsweise 0,7 bis 3 mm, bevorzugt 1 bis 2,5 mm, aufweisen. In diesem Zusammenhang sollten die Ausmaße des Kunststoffprofils 4 derart ausgewählt werden, daß eine zumindest im wesentlichen vollflächige Beschichtung der Schmalseite 2 mit dem Kunststoffprofil 4 erfolgen kann. Die Höhe des Kunststoffprofils 4 sollte somit in Abhängigkeit von der Höhe der Schmalseite 2 ausgewählt werden.

Das Kunststoffprofil 4 kann einen Kunststoff auf Basis von Polyvinylchlorid (PVC), Polyolefinen, insbesondere Polypropylen (PP), Polymethylmethacrylat (PMMA), Polystyrolen, insbesondere AcrylnitrilButadien/Styrol-Copolymer (ABS), bevorzugt Polypropylen (PP), umfassen oder hieraus bestehen.

Im Rahmen des erfindungsgemäßen Verfahrens ist es weiterhin vorgesehen, daß das Kunststoffprofil 4 vor dem Aufbringen auf die Schmalseite 2 mit einem Haftvermittler versehen wird. Diesbezüglich wird der Haftvermittler auf der auf die Schmalseite 2 aufzubringende Seite des Kunststoffprofils 4 aufgebracht. Der Haftvermittler sollte in diesem Zusammenhang, bezogen auf das Trockengewicht des Haftvermittlers, in Mengen von 2 bis 20 g/m², insbesondere 5 bis 15 g/m², vorzugsweise 10 bis 12 g/m², auf das Kunststoffprofil 4 aufgetragen werden. Die Verwendung eines Haftvermittlers, welcher synonym auch als Primer bezeichnet wird, führt zu einer verbesserten Verklebung des Kunststoffprofils 4 auf der Schmalseite 2, so daß verbesserte Hafteigenschaften resultieren. Das Auftragen des Haftvermittlers auf das Kunststoffprofil 4 kann dabei gewissermaßen im Sinne einer Vorbehandlung durchgeführt werden, wobei das so behandelte Kunststoffprofil 4 nach Trocknen des Haftvermittlers sogar zunächst noch gelagert werden kann, beispielsweise in Form von Rollen oder dergleichen.

Der Haftvermittler führt insgesamt sozusagen zu einer Erhöhung der Kompatibilität des Kunststoffprofils 4 zu dem nachfolgend noch beschriebenen Klebstoff 7, mit welchem das Kunststoffprofil 4 auf die Schmalseite 2 aufgebracht wird. Zudem kann auch die Kompatibilität des Kunststoffprofils 4 in bezug auf die nachfolgend noch beschriebene Versiegelungsmasse 5 verbessert werden.

In diesem Zusammenhang kann als Haftvermittler ein Dispersionsklebstoff oder Schmelzklebstoff, insbesondere ein lösemittelhaltiger oder wäßriger Dispersionsklebstoff, vorzugsweise ein Polyurethan (PU)-Dispersionsklebstoff, eingesetzt werden. Gleichermaßen kann als Haftvermittler ein Dispersionsklebstoff eingesetzt werden, welcher ausgewählt wird aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen, insbesondere wobei als Haftvermittler ein Dispersionsklebstoff auf Basis einer insbesondere wäßrig basierten Polyurethandispersion eingesetzt werden kann.

Der Haftvermittler kann mindestens einen vorzugsweise anorganischen Füllstoff, insbesondere wie nachfolgend definiert, aufweisen. Dabei kann der Füllstoff, bezogen auf den Haftvermittler, in Mengen von 5 bis 50 Gew.-%, insbesondere 10 bis 40 Gew.-%, vorzugsweise 15 bis 30 Gew.-%, zugegeben werden, wobei sich die vorgenannten Mengenangaben auf den nichtausgehärteten bzw. nichtabgetrockneten Zustand des Haftvermittlers beziehen. In diesem Zusammenhang sollte die Menge an Füllstoffen in bezug auf lösemittelhaltige Dispersionen tendenziell etwas geringer ausfallen, wobei diesbezüglich eine Menge von etwa 15 Gew.-% Füllstoff bevorzugt ist. In bezug auf wäßrige Dispersionsklebstoffe sollte der Gehalt an Füllstoffen tendenziell etwas höher liegen, wobei diesbezüglich ein Wert von etwa 30 Gew.-% erfindungsgemäß bevorzugt ist. Neben den nachfolgend noch definierten Füllstoffen eignen sich in bezug auf den Haftvermittler insbesondere hochdisperse Kieselsäure sowie Siliziumdioxid.

Was die Anbringung des Kunststoffprofils 4 auf die Schmalseite 2 des plattenförmigen Werkstoffteils 1 anbelangt, so wird das Kunststoffprofil 4 in erfindungsgemäßer Weise nach Einbringen der Abkantung 6 auf die Schmalseite 2 aufgebracht. Zudem wird das Kunststoffprofil 4, wie in den Verfahrensschritten B1, B2 sowie C1, C2 gemäß Fig. 2 dargestellt, vor Verfüllung der Abkantung 6 mit der Versiegelungsmasse 5 auf die Schmalseite 2 aufgebracht. Dabei kann das Aufbringen bzw. Verkleben des Kunststoffprofils 4 in dem Fachmann an sich bekannter Weise realisiert werden, beispielsweise in Form eines Anpressens bzw. Aufdrückens insbesondere mittels Walzen oder Rollen oder dergleichen. Wie die Verfahrensschritte C1 und C2 gemäß Fig. 2 zeigen, bildet das aufgeklebte bzw. aufgebrachte Kunststoffprofil 4 gewissermaßen die Außenwandung der Abkantung 6 bis zur Höhe der Flachseite 3, so daß nach Anbringen des Kunststoffprofils 4 gewissermaßen eine Nut bzw. Fuge auf Basis der Abkantung 6 mit einer durch das Kunststoffprofil 4 gebildeten Außenwandung resultiert, so daß auf diese Weise das Auffüllen der Abkantung 6 mit der Versiegelungsmasse 5 effizient durchgeführt werden kann, da auf diese Weise ein Ablaufen der Versiegelungsmasse 5 vor deren Aushärten aus der Abkantung 6 verhindert wird.

Zu Zwecken des Aufbringens des Kunststoffprofils 4 auf die Schmalseite 2 sollte erfindungsgemäß ein Klebstoff 7 eingesetzt werden. Das Aufbringen des Kunststoffprofils 4 auf die Schmalseite 2 sollte somit mittels eines Klebstoffs 7 erfolgen, insbesondere wobei als Klebstoff 7 ein extrudierbarer und/oder filmbildender Klebstoff 7, insbesondere ein Schmelzklebstoff oder ein Dispersionsklebstoff, eingesetzt werden kann. Bei den Schmelzklebstoffen kann es sich um thermoplastische, insbesondere nichtreaktive, oder reaktive Schmelzklebstoffe handeln. Diesbezüglich können als Schmelzklebstoffe somit thermoplastische Schmelzklebstoffe, insbesondere Schmelzklebstoffe auf Basis von Ethylen/Vinylacetaten (EVA); Polyolefinen, wie amorphen Poly-α-olefinen oder metallocenkatalytisch hergestellten Polyolefinen; Polyacrylaten; Copolyamiden; Copolyestern; und/oder thermoplastischen Polyurethanen oder ihren entsprechenden Co- und/oder Terpolymeren, eingesetzt werden.

Zudem ist es erfindungsgemäß möglich, daß als Schmelzklebstoffe zur Befestigung des Kunststoffprofils 4 reaktive Schmelzklebstoffe, insbesondere feuchtigkeitsvernetzende und/oder strahlenvernetzende, insbesondere UV-vernetzende Schmelzklebstoffe, vorzugsweise Schmelzklebstoffe auf Basis von silangepfropften amorphen Poly-α-olefinen und/oder isocyanatterminierten Polyurethanen, besonders bevorzugt Schmelzklebstoffe auf Basis von isocyanatterminierten Polyurethanen, eingesetzt werden. Gleichermaßen können als Schmelzklebstoffe für den Klebstoff 7 reaktive Schmelzklebstoffe auf Basis strahlenvernetzender reaktiver Klebstoffe, insbesondere unter UV-Bestrahlung vernetzender Schmelzklebstoffe, eingesetzt werden.

Zudem ist es erfindungsgemäß möglich, daß als Schmelzklebstoff für den Klebstoff 7 zur Befestigung des Kunststoffprofils 4 ein Schmelzklebstoff auf Grundlage mindestens eines Schmelzklebstoffbasispolymers eingesetzt wird, insbesondere ausgewählt aus der Gruppe von (i) Polyurethanen (PUR), insbesondere Polyurethanelastomeren (TPE-U); (ii) EthylenNinylacetat-Copolymeren (EVAC); (iii) Polyolefinen (PO), insbesondere Polyethylenen (PE) und vorzugsweise amorphen Poly-α-olefinen (APAO); (iv) funktionalisierten und/oder modifizierten Polyolefinen, insbesondere silanfunktionalisierten Polyolefinen; (v) Blockcopolymeren, insbesondere kautschukartigen Blockcopolymeren, vorzugsweise Styrol/Isopren/Styrol-Blockcopolymeren (SIS-Blockcopolymeren) und Styrol/Butadien/Styrol-Blockcopolymeren (SBS-Blockcopolymeren); (vi) Polyolefincopolymeren, insbesondere metallocenkatalytisch hergestellten Polyolefincopolymeren, vorzugsweise insbesondere metallocenkatalytisch hergestellten Ethylen/Octen-Copolymeren und Propen/Hexen-Copolymeren; (vii) Polyestern (PET), insbesondere Polyester-Elastomeren (PET-E); (viii) Polyamiden (PA) und Copolyamiden, insbesondere Copolyamid-Elastomeren (TPE-A); sowie deren Mischungen, besonders bevorzugt Polyurethanen. Als Schmelzklebstoff kann auch ein Schmelzklebstoffsystem auf Basis metallocenkatalytisch hergestellter Copolymere, vorzugsweise auf Grundlage mindestens zweier Olefine, eingesetzt werden.

Zudem ist es erfindungsgemäß möglich, daß der Schmelzklebstoff zur Befestigung des Kunststoffprofils 4 außerdem mindestens ein Additiv enthält, insbesondere wobei die Additive an sich bekannte Zusatzstoffe, wie insbesondere Weichmacher, hochsiedende organische Öle, Ester oder andere der Plastifizierung dienende Additive, Stabilisatoren, insbesondere UV-Stabilisatoren, Antioxidantien, Säurefänger, insbesondere nanoteilige Füllstoffe und/oder Alterungsschutzmittel, sind. Zudem können dem Schmelzklebstoff nichtreaktive Polymere, Harze und/oder Wachse zugesetzt werden, insbesondere in Mengen von 1 Gew.-% bis 70 Gew.-%, insbesondere 5 Gew.-% bis 65 Gew.-%, vorzugsweise 10 Gew.-% bis 60 Gew.-%, bezogen auf den Schmelzklebstoff. Alternativ kann erfindungsgemäß gleichermaßen ein Dispersionsklebstoff als Klebstoff 7 zur Befestigung des Kunststoffprofils 4 eingesetzt werden. Demnach ist es erfindungsgemäß möglich, daß als Klebstoff 7 ein Dispersionsklebstoff eingesetzt wird, ausgewählt aus der Gruppe von Polyurethandispersionen, Acrylatdispersionen, Chloroprendispersionen, Epoxidharzdispersionen, Ethylenvinylacetatdispersionen (EVA-Dispersionen) und Polyvinylacetatdispersionen (PVAc-Dispersionen) sowie Mischungen aus zwei oder mehreren der vorgenannten Dispersionen, insbesondere wobei als Klebstoff 7 ein Dispersionsklebstoff auf Basis einer insbesondere wäßrig basierten Polyurethandispersion eingesetzt werden kann.

Der erfindungsgemäß eingesetzte Klebstoff 7 zur Anbringung bzw. Verklebung des Kunststoffprofils 4 kann mindestens einen vorzugsweise anorganischen Füllstoff enthalten, insbesondere wie nachfolgend definiert. In diesem Zusammenhang kann der Füllstoff, bezogen auf den Klebstoff 7, in Mengen von 1 bis 40 Gew.-%, insbesondere 2 bis 35 Gew.-%, vorzugsweise 5 bis 30 Gew.-%, zugegeben werden. Hierdurch können die Hafteigenschaften zusätzlich verbessert werden.

Was die für den zuvor beschriebenen Klebstoff 7 sowie für den zuvor beschriebenen Haftvermittler verwendbaren Füllstoffe bzw. Füllstoffpartikel anbelangt, so können diesbezüglich, jeweils unabhängig voneinander, Füllstoffpartikel auf Basis anorganischer Oxide, Hydroxide, Silikate, Carbonate und/oder Sulfate, insbesondere Aluminiumoxide, Siliciumdioxide, Bariumsulfate, Calciumcarbonate, Alkali- und Erdalkalioxide, Titanoxide, Eisenoxide und dergleichen, eingesetzt werden. Als Füllstoffe können vorzugsweise stäbchenförmige oder aber kugelförmige oder nahezu kugelförmige Füllstoffpartikel eingesetzt werden und/oder Füllstoffpartikel mit einer mittleren Teilchengröße im Bereich von 3 µm bis 20 µm, insbesondere 4 µm bis 10 µm, eingesetzt werden. Die Verwendung derartiger Füllstoffe führt generell zu einer Verbesserung der Klebeleistung, insbesondere was die Ausbildung einer Kompatibilität der zu verklebenden Substrate, also Kunststoffprofil 4 einerseits und Schmalseite 2 des plattenförmigen Werkstoffteils 1 anbelangt.

Der Klebstoff 7 kann vor dem Aufbringen des Kunststoffprofils 4 auf das Kunststoffprofil 4 und/oder auf die Schmalseite 2, vorzugsweise auf das Kunststoffprofil 4, aufgetragen werden. In diesem Zusammenhang sollte der Klebstoff 7, bezogen auf das Trockengewicht des Klebstoffs 7, in Mengen von 50 bis 500 g/m², insbesondere 100 bis 400 g/m², vorzugsweise 150 bis 300 g/m², bevorzugt 200 bis 250 g/m², auf das Kunststoffprofil 4 und/oder auf die Schmalseite 2, vorzugsweise auf das Kunststoffprofil 4, aufgetragen werden.

Im Rahmen der vorliegenden Erfindung kann es vorgesehen sein, daß der Klebstoff 7 vor dem Aufbringen des Kunststoffprofils 4 auf das Kunststoffprofil 4 selbst und/oder auf die Schmalseite 2 aufgetragen wird derart, daß beim Aufbringen des Kunststoffprofils 4 auf die Schmalseite 2 die Abkantung 6 zumindest teilweise mit dem Klebstoff 7 verfüllt wird. Dies kann beispielsweise dadurch erfolgen, daß auf der der Abkantung 6 zugeordneten Fläche der Wandung des Kunststoffprofils 4 eine höhere Menge an Klebstoff 7 aufgetragen wird, so daß der überschüssige Klebstoff 7 dann sozusagen bei Aufbringen des Kunststoffprofils 4 auf die Schmalseite 2 in die Abkantung 6 eingebracht bzw. gedrückt wird. Erfindungsgemäß kann es auch vorgesehen sein, daß die Abkantung 6 vollständig mit dem Klebstoff 7 verfüllt wird, da dies - wie die Anmelderin überraschenderweise herausgefunden hat - gleichermaßen zu guten Ergebnissen hinsichtlich einer Abdichtung bzw. Versiegelung des zuvor definierten Übergangsbereichs ÜB führt. Diesbezüglich sollte eine hohe Kompatibilität zwischen Klebstoff 7 einerseits und Versiegelungsmasse 5 andererseits vorliegen, insbesondere da die Versiegelungsmasse 5 in einem solchen Fall der Verfüllung der Abkantung 6 mit dem Klebstoff 7 diesen im Bereich der Abkantung 6 gewissermaßen überschichtet.

Das Aufbringen der Versiegelungsmasse 5 auf die Flachseite 3 des plattenförmigen Werkstoffsubstrats 1 bzw. das Verfüllen der Abkantung 6 mit der Versiegelungsmasse 5 kann in einem nachfolgenden Schritt insbesondere nach dem Aufbringen des Kunststoffprofils 4 erfolgen, wie gemäß den Schritten D 1 und D2 in Fig. 2 dargestellt. In diesem Zusammenhang hat es sich erfindungsgemäß als besonders vorteilhaft erwiesen, wenn als Versiegelungsmasse 5 thermoplastische oder reaktive Schmelzklebstoffe zum Einsatz kommen, insbesondere wobei als Schmelzklebstoffe blockfreie Schmelzklebstoffe eingesetzt werden sollten. Der Begriff "blockfrei", wie er erfindungsgemäß verwendet wird, bezieht sich auf einen Schmelzklebstoff, welcher bei 25 °C nichtklebrig ausgebildet ist. Mit derartigen Schmelzklebstoffen kann eine besonders homogene Auftragung der Versiegelungsmasse 5 auf die Flachseite 3 und eine gute Verfüllung der Abkantung 6 mit der Versiegelungsmasse 5 erfolgen.

In diesem Zusammenhang können als Versiegelungsmasse 5 thermoplastische Schmelzklebstoffe, insbesondere Schmelzklebstoffe auf Basis von Ethylen/Vinylacetaten (EVA); Polyolefinen, wie amorphen Poly-α-olefinen oder metallocenkatalytisch hergestellten Polyolefinen; Polyacrylaten; Copolyamiden; Copolyestern; und/oder thermoplastischen Polyurethanen oder ihren entsprechenden Co- und/oder Terpolymeren, eingesetzt werden.

Gleichermaßen können als Versiegelungsmasse 5 reaktive Schmelzklebstoffe, insbesondere feuchtigkeitsvernetzende und/oder strahlenvernetzende, insbesondere UV-vernetzende Schmelzklebstoffe, vorzugsweise Schmelzklebstoffe auf Basis von silangepfropften amorphen Poly-α-olefinen und/oder isocyanatterminierten Polyurethanen, besonders bevorzugt Schmelzklebstoffe auf Basis von isocyanatterminierten Polyurethanen, eingesetzt werden. Zudem können als Schmelzklebstoffe für die Versiegelungsmasse 5 reaktive Schmelzklebstoffe auf Basis strahlenvernetzender reaktiver Klebstoffe, insbesondere unter UV-Bestrahlung vernetzender Schmelzklebstoffe, eingesetzt werden.

Erfindungsgemäß kann es vorgesehen sein, daß als Versiegelungsmasse 5 ein Schmelzklebstoff auf Grundlage mindestens eines Schmelzklebstoffbasispolymers eingesetzt wird, insbesondere ausgewählt aus der Gruppe von (i) Polyurethanen (PUR), insbesondere Polyurethanelastomeren (TPE-U); (ii) Ethylen/Vinylacetat-Copolymeren (EVAC); (iii) Polyolefinen (PO), insbesondere Polyethylenen (PE) und vorzugsweise amorphen Poly-α-olefinen (APAO); (iv) funktionalisierten und/oder modifizierten Polyolefinen, insbesondere silanfunktionalisierten Polyolefinen; (v) Blockcopolymeren, insbesondere kautschukartigen Blockcopolymeren, vorzugsweise Styrol/Isopren/Styrol-Blockcopolymeren (SIS-Blockcopolymeren) und Styrol/Butadien/Styrol-Blockcopolymeren (SBS-Blockcopolymeren); (vi) Polyolefincopolymeren, insbesondere metallocenkatalytisch hergestellten Polyolefincopolymeren, vorzugsweise insbesondere metallocenkatalytisch hergestellten Ethylen/Octen-Copolymeren und Propen/Hexen-Copolymeren; (vii) Polyestern (PET), insbesondere Polyester-Elastomeren (PET-E); (viii) Polyamiden (PA) und Copolyamiden, insbesondere Copolyamid-Elastomeren (TPE-A); sowie deren Mischungen, besonders bevorzugt Polyurethanen. Zudem kann als Schmelzklebstoff für die Versiegelungsmasse 5 ein Schmelzklebstoffsystem auf Basis metallocenkatalytisch hergestellter Copolymere, vorzugsweise auf Grundlage mindestens zweier Olefine, eingesetzt werden. Erfindungsgemäß können besonders gute Ergebnisse hinsichtlich der Versiegelung des Übergangsbereichs ÜB erreicht werden, wenn als Versiegelungsmasse 5 ein Polyurethanschmelzklebstoff eingesetzt wird.

Was die Versiegelungsmasse 5 weiterhin anbelangt, so sollte erfindungsgemäß diesbezüglich ein zumindest im wesentlichen füllstoffreier oder aber allenfalls füllstoffarmer Schmelzklebstoff eingesetzt werden. In diesem Zusammenhang sollte der Gehalt an Füllstoffen, bezogen auf den Schmelzkleber, weniger als 25 Gew.-%, insbesondere weniger als 20 Gew.-%, bevorzugt weniger als 15 Gew.-%, besonders bevorzugt weniger als 5 Gew.-%, besonders bevorzugt weniger als 2 Gew.-%, ganz besonders bevorzugt weniger als 1 Gew.-%, betragen. Sofern in bezug auf die Versiegelungsmasse 5 Füllstoffe vorgesehen sind, können die bereits zuvor definierten Füllstoffe eingesetzt werden. Einzelfallbedingt oder anwendungsbezogen kann von diesen Werten abgewichen werden, ohne daß der Bereich der Erfindung verlassen wird. So kann es beispielsweise vorgesehen sein, daß der Gehalt an Füllstoffen, bezogen auf den Schmelzklebstoff, weniger als 30 Gew.-%, insbesondere weniger als 25 Gew.-%, beträgt.

Das Auftragen der Versiegelungsmasse 5 auf die Flachseite 3 bzw. das Verfüllen der Abkantung 6 mit der Versiegelungsmasse 5 erfolgt in dem Fachmann an sich bekannter Weise. So kann es erfindungsgemäß vorgesehen sein, daß die Versiegelungsmasse 5 mittels eines Schlitzdüsenverfahrens in die Abkantung 6 verfüllt und/oder auf die Flachseite 3 aufgebracht wird. In diesem Zusammenhang sollte der zuvor beschriebene Gehalt an Füllstoffen, bezogen auf den Schmelzkleber, eingestellt werden derart, daß eine gute Düsengängigkeit bzw. eine verminderte Abrasion an der Düse vorliegt. Diesbezüglich sollte der Gehalt an Feststoffen, bezogen auf den Schmelzklebstoff, weniger als 30 Gew.-%, bevorzugt weniger als 25 Gew.-%, betragen.

Im Rahmen der vorliegenden Erfindung werden besonders gute Ergebnisse hinsichtlich der Abdichtung des Übergangsbereichs ÜB erreicht, wenn die Versiegelungsmasse 5 ausgewählt wird aus reaktiven Schmelzklebstoffen auf Polyurethanbasis ("PUR-Hotmelts"), insbesondere den folgenden Produkten, welche von der Jowat AG, Bundesrepublik Deutschland, vertrieben werden: Jowatherm-Reaktant^{®} 600.70, 600.71, 600.72, 600.73, 600.79; Jowatherm-Reaktant^{®} 602.30, 602.31, 602.32, 602.34, 602.36, 602.37 und Jowatherm-Reaktant^{®} 602.39. Für die vorgenannten reaktiven Schmelzklebstoffe, insbesondere für die Produkte Jowatherm-Reaktant^{®} 600.70 und Jowatherm-Reaktant^{®} 602.30, hat sich ein Gehalt an Füllstoffen, bezogen auf den Schmelzklebstoff, von weniger als 25 Gew.-%, insbesondere weniger als 20 Gew.-%, bevorzugt weniger als 15 Gew.-%, als besonders vorteilhaft erwiesen.

Gemäß einer erfindungsgemäß bevorzugten Ausführungsform wird die Versiegelungsmasse 5 aufgebracht derart, daß die Abkantung 6 zumindest im wesentlichen vollständig mit der Versiegelungsmasse 5 verfüllt wird, wie es gemäß den Verfahrensschritten D1 und D2 in Fig. 2 verdeutlich wird. Wie die Verfahrensschritte D1, D2 sowie E1 und E2 von Fig. 2 weiter verdeutlichen, sollte die Versiegelungsmasse 5 bündig an der auf die Schmalseite 2 aufgebrachten Seite des Kunststoffprofils 4 anliegen. Erfindungsgemäß sollte die Versiegelungsmasse 5 mit der auf der Schmalseite 2 aufgebrachten Seite des Kunststoffprofils 4 abdichtend aufgetragen werden. Auf diese Weise resultiert mittels des erfindungsgemäßen Verfahrens eine Versiegelung des Übergangsbereichs ÜB zwischen dem Kunststoffprofil 4 einerseits und der Versiegelungsmasse 5 andererseits, da eine dauerhafte, wärmeresistente und feuchtigkeitsundurchlässige Verbindung bzw. Versiegelung zwischen dem Kunststoffprofil 4 einerseits und der Versiegelungsmasse 5 andererseits geschaffen wird. Die hohe Beständigkeit der Versiegelung wird dabei insbesondere durch eine vergrößerte Kontaktfläche - bedingt durch die Abkantung 6 - zwischen Versiegelungsmasse 5 und Kunststoffprofil 4 gewährleistet.

Zudem zeigen die Verfahrensschritte D1, D2 sowie E1, E2 gemäß Fig. 2 eine erfindungsgemäß bevorzugte Ausführungsform, wonach die Versiegelungsmasse 5 aufgebracht werden kann derart, daß zudem ein an der Abkantung 6 angrenzender Bereich der Flachseite 3 des Werkstoffsubstrats 1 mit der Versiegelungsmasse 5 beschichtet wird. Mit anderen Worten erstreckt sich die Versiegelungsmasse 5 gemäß dieser erfindungsgemäß bevorzugten Ausführungsform gewissermaßen ausgehend von der Aussparung 6 bzw. der durch das Kunststoffprofil 4 gebildeten Außenwandung der Aussparung 6 über einen Teil der Flachseite 3 des plattenförmigen Werkstoffsubstrats 1. Somit kann sich die Versiegelungsmasse 5 über einen an der Abkantung 6 angrenzenden Bereich der Flachseite 3 des Werkstoffsubstrats 3 erstrecken, so daß gewissermaßen der sich der Aussparung 6 anschließende bzw. der an der Aussparung 6 angrenzende Bereich der Flachseite 3 mit der Versiegelungsmasse 5 beschichtet wird.

In diesem Zusammenhang kann es erfindungsgemäß vorgesehen sein, daß der mit der Versiegelungsmasse 5 beschichtete Bereich der Flachseite 3 zumindest im wesentlichen parallel zur Abkantung 6 verläuft. Somit resultiert eine gewissermaßen streifenförmige Beschichtung der Flachseite 3 mit der Versiegelungsmasse 5 bei gleichzeitiger Verfüllung der Abkantung 6 mit der Versiegelungsmasse 5.

Was die Beschichtung der Flachseite 3 mit der Versiegelungsmasse 5 bzw. das Auffüllen der Abkantung 6 mit der Versiegelungsmasse 5 weiterhin anbelangt, so erfolgen diese vorzugsweise in einem einzigen Arbeitsschritt, worin ein weiterer Vorteil des erfindungsgemäßen Verfahrens zu sehen ist.

Durch die erfindungsgemäße Ausführungsform, wonach sich die Versiegelungsmasse 5 zumindest über einen Teil der Flachseite 3 erstreckt, wird eine effektive Schutzfunktion gegenüber Wärme und Feuchtigkeit auch in bezug auf solche Abschnitte der resultierenden Küchen- bzw. Arbeitsplatte gewährleistet, die an den Übergangsbereich ÜB angrenzen. Dabei sollte die mit der Versiegelung 5 beschichtete Fläche der Flachseite 3 ausgebildet werden derart, daß zumindest die Wärme- bzw. Feuchtigkeitsquellen von im Gebrauchszustand unter der resultierenden Küchen- bzw. Arbeitsplatte positionierten Küchengeräten an den mit der Versiegelungsmasse 5 abgedeckten Bereichen der Küchen- bzw. Arbeitsplatte positioniert sind.

Der mit der Versiegelungsmasse 5 beschichtete Bereich der Flachseite 3 kann sich aber auch in erfindungsgemäß bevorzugter Weise über die gesamte Länge des Werkstoffsubstrats 1 erstrecken. Erfindungsgemäß ist es aber auch möglich, daß - wie zuvor beschrieben - sich der mit der Versiegelungsmasse 5 beschichtete Bereich der Flachseite 3 abschnittsweise über die Länge des Werkstoffsubstrats 1 erstreckt. Dabei kann die Erstreckung des mit der Versiegelungsmasse 5 beschichteten Bereichs auch unabhängig von der Erstreckung der Abkantung 6 erfolgen.

Der mit der Versiegelungsmasse 5 beschichtete Bereich kann eine Breite von 1 bis 50 %, insbesondere 2 bis 40 %, vorzugsweise 3 bis 30 %, bevorzugt 5 bis 25 %, besonders bevorzugt 10 bis 20 %, der Breite der Flachseite 3 aufweisen. Auch eine vollständige Beschichtung der Flachseite 3 ist möglich.

In diesem Zusammenhang kann es erfindungsgemäß vorgesehen sein, daß der mit der Versiegelungsmasse 5 beschichtete Bereich eine Breite von 1 bis 50 cm, insbesondere 2 bis 40 cm, vorzugsweise 3 bis 30 cm, bevorzugt 4 bis 20 cm, besonders bevorzugt 6 bis 10 cm, aufweist.

Was die Dicke des mit der Versiegelungsmasse 5 beschichteten Bereichs anbelangt, so kann dieser eine Dicke von 0,01 bis 5 mm, insbesondere 0,05 bis 4 mm, vorzugsweise 0,1 bis 3 mm, bevorzugt 0,15 bis 2 mm, besonders bevorzugt 0,2 bis 1 mm, aufweisen. Die diesbezügliche Dicke bezieht sich dabei auf den mit der Versiegelungsmasse 5 beschichteten Bereich der Flachseite 3, welcher nicht im Bereich der Abkantung 6 liegt.

Erfindungsgemäß kann es vorgesehen sein, daß nach Aufbringen der Versiegelungsmasse 5 - wie in den Verfahrensschritten E1 und E2 gemäß Fig. 2 dargestellt - oder vor Aufbringen der Versiegelungsmasse (nicht dargestellt) eine Nachbearbeitung des Übergangsbereichs ÜB und/oder eine Nachbearbeitung der dem Übergangsbereich ÜB zugeordneten Kante des Kunststoffprofils 4 erfolgt, insbesondere mittels Kantenfräsung, Kantenschliff, Ziehklinge, Poliervorrichtung und dergleichen. In diesem Zusammenhang kann insbesondere eine weitere Bearbeitung der Kanten des Kunststoffprofils 4 erfolgen, so daß hinsichtlich der resultierenden Küchen- bzw. Arbeitsplatte eine verbesserte Optik bzw. Haptik resultiert. In erfindungsgemäß bevorzugter Weise kann die Nachbearbeitung des Übergangsbereichs ÜB und/oder die Nachbearbeitung der dem Übergangsbereich ÜB zugeordneten Kante des Kunststoffprofils 4 vor Aufbringen der Versiegelungsmasse 5 erfolgen.

Nach dem erfindungsgemäßen Verfahren kann ein plattenförmiges Werkstoffteil, welches insbesondere in Form einer Küchen- und/oder Arbeitsplatte vorliegt, erhalten werden.

Das plattenförmige Werkstoffteil liegt insbesondere in Form einer Küchen- und/oder Arbeitsplatte vor, welche ein plattenförmiges Werkstoffsubstrat 1 und mindestens ein an einer Schmalseite 2 des Werkstoffsubstrats 1 aufgebrachtes Kunststoffprofil 4 sowie eine an einer Flachseite 3 des Werkstoffteils 1 aufgebrachte Versiegelungsmasse 5 aufweist, wobei das plattenförmige Werkstoffsubstrat 1 in einem Übergangsbereich ÜB zwischen dem Kunststoffprofil 4 und der Versiegelungsmasse 5 eine Abkantung 6 aufweist, wobei die Abkantung 6 zur Abdichtung des Übergangsbereichs ÜB mit der Versiegelungsmasse 5 verfüllt ist. Das plattenförmige Werkstoffteil weist eine äußerst wirkungsvolle Versiegelung auf, welche in hohem Maße beständig gegenüber Hitze und/oder Feuchtigkeitseinwirkung ist.

Das plattenförmige Werkstoffteil kann zur Herstellung von Möbeln, insbesondere Küchenzeilen, und Einrichtungsgegenständen beliebiger Art und/oder in der Holz- und Möbelindustrie verwendet werden. In diesem Zusammenhang kann das plattenförmige Werkstoffteil beispielsweise in Küchenzeilen integriert werden. Gleichermaßen eignet sich das Werkstoffteil auch zur Verwendung im Bereich von Badezimmermöbeln und insgesamt im Rahmen der Verwendung für Möbel, welche hohen Belastungen hinsichtlich Wärme und/oder Feuchtigkeit ausgesetzt sind, beispielsweise in Feuchträumen, Wärmekammem oder dergleichen.

Weiterhin können Möbel, insbesondere Küchenzeilen und Einrichtungsgegenstände, das Werkstoffteil aufweisen bzw. unter Verwendung des Werkstoffteils hergestellt sein.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird nachfolgend anhand von Ausführungsbeispielen veranschaulicht, welche die vorliegende Erfindung jedoch keinesfalls beschränken.

### Ausführungsbeispiele:

Zur Erprobung bzw. Ermittlung der Wirksamkeit der nach dem erfindungsgemäßen Verfahren hergestellten Versiegelung des Übergangsbereichs zwischen einem an einer Schmalseite eines plattenförmigen Werkstoffsubstrats aufgebrachten Kunststoffprofil und einer an einer Flachseite des plattenförmigen Werkstoffsubstrats aufgebrachten Versiegelungsmasse wurden Wasserdampftests und Feuchtigkeitstests mit direkter Exposition der Versiegelung im Übergangsbereich durchgeführt:
a) In einer ersten Versuchsserie wurden fünf nach dem erfindungsgemäßen Verfahren hergestellte Küchen- bzw. Arbeitsplatten Feuchtigkeits- und Wasserdampftests unterzogen. Zur Herstellung dieser Küchen- bzw. Arbeitsplatten wurde als plattenförmiges Werkstoffsubstrat eine Spanplatte mit einer Höhe von 19 mm mit einer einseitigen Dekorbeschichtung verwendet, in welche zunächst im Übergangs- bzw. Kantenbereich zwischen der Schmalseite und der der Dekorbeschichtung abgewandten Flachseite eine Abkantung durch Fräsen eingebracht wurde. Die Abkantung besaß dabei einen im wesentlichen rechteckigen Querschnitt mit einer Kantenlänge von jeweils etwa 1 mm. In einem nächsten Arbeitsschritt wurde die Schmalseite mit einem zuvor mit einem Haftvermittler behandelten Kunststoffprofil mit einer Höhe von etwa 22 mm beschichtet. Das Kunststoffprofil wurde mit einem Schmelzklebstoff auf Polyurethanbasis mit der Schmalseite verklebt. Nach Aushärten der Klebemasse erfolgte eine Bearbeitung der überstehenden Kanten des Kunststoffprofils mittels Fräsen, so daß die Kanten bündig mit dem plattenförmigen Werkstoffsubstrat abschlossen. In einem nächsten Arbeitsschritt wurde die Versiegelungsmasse aufgetragen. Hierzu wurde ein blockfreier Schmelzklebstoff auf Basis einer Polyurethanzusammensetzung verwendet. Die Versiegelungsmasse wurde im Schlitzdüsenverfahren aufgetragen, wobei die Abkantung vollständig mit der Versiegelungsmasse verfüllt wurde. Zudem erfolgte die Auftragung der Versiegelungsmasse derart, daß ein an den Übergangsbereich angrenzender Bereich der Flachseite in einer Breite von etwa 60 mm gleichermaßen mit der Versiegelungsmasse beschichtet wurde.
   Die auf diese Wiese hergestellten Küchen- bzw. Arbeitsplatten wurden nachfolgend einem Feuchtigkeits- bzw. Wasserdampftest unterzogen, wobei insgesamt fünf nach dem erfindungsgemäßen Verfahren hergestellte Küchen- bzw. Arbeitsplatten im Übergangsbereich über einen Zeitraum von 4 Stunden einem feuchtigkeitsangereicherten und erwärmten Luftstrom ausgesetzt wurden. Nach erfolgter Exposition zeigten die nach dem erfindungsgemäßen Verfahren hergestellten Küchen- bzw. Arbeitsplatten im Übergangsbereich keinerlei Beschädigung in Form von Delaminierungen und/oder Aufquellungen.Der Übergangsbereich wies insgesamt keine Beschädigungen auf.
   In einem weiteren Testverfahren wurden fünf weitere nach dem erfindungsgemäßen Verfahren hergestellte Küchen- bzw. Arbeitsplatten untersucht, wobei ein mit Wasser getränkter Schwamm über eine Zeitdauer von 4 Stunden auf den Übergangsbereich gelegt wurde. Auch in diesem Fall wies keine der nach dem erfindungsgemäßen Verfahren hergestellten Küchen- bzw. Arbeitsplatten Veränderungen im Übergangsbereich auf.
b) Die zuvor beschriebenen Testverfahren wurden an nicht mit dem erfindungsgemäßen Verfahren hergestellten Küchen- bzw. Arbeitsplatten wiederholt, wobei diesbezüglich wie unter a) beschriebene Arbeitsplatten eingesetzt wurden, welche an der Schmalseite mit einem Kunststoffprofil versehen waren und zudem eine daran anliegende Versiegelung mit einer Breite von etwa 60 mm auf der der Dekorbeschichtung abgewandten Flachseite aufwiesen, wobei der Übergangsbereich zwischen dem Kunststoffprofil und der auf der Schmalseite aufgebrachten Versiegelungsmasse nicht mit einer Abkantung versehen wurde (vgl. Fig. 1).
   Diese nicht mit dem erfindungsgemäßen Verfahren hergestellten Küchen- bzw. Arbeitsplatten wurden einem Feuchtigkeits- bzw. Wasserdampftest unter Exposition mit einem feuchtigkeitsangereicherten und erwärmten Luftstrom im Übergangsbereich für eine Dauer von 4 Stunden unterzogen. Nach Durchführung des Feuchtigkeits- bzw. Wasserdampftests zeigten zwei der fünf Platten leichte bis mäßige Aufquellungen im Übergangsbereich einhergehend mit einer leichten Delaminierung des Kunststoffprofils und der Versiegelungsmasse im Übergangsbereich. Drei der fünf getesteten, nicht mit dem erfindungsgemäßen Verfahren hergestellten Küchen- bzw. Arbeitsplatten zeigten starke Aufquellungen einhergehend mit einer deutlichen Ablösung des Kunststoffprofils.
   Zudem wurde auch an den nicht mit dem erfindungsgemäßen Verfahren hergestellten Küchen- bzw. Arbeitsplatten der zuvor beschriebene Test unter Verwendung eines wassergetränkten Schwammes durchgeführt. Nach einer Auflage des Schwammes für 4 Stunden auf den Übergangsbereich zeigten vier von fünf der nicht mit dem erfindungsgemäßen Verfahren hergestellten Küchen- bzw. Arbeitsplatten mäßige Aufquellungen einhergehend mit einem Ablösen des Kontaktbereichs zwischen Kunststoffprofil einerseits und Versiegelungsmasse andererseits. Bei einer nicht mit dem erfindungsgemäßen Verfahren hergestellten Küchen- bzw. Arbeitsplatte wurde zudem eine starke Aufquellung einhergehend mit einer deutlichen Delaminierung des Kunststoffprofils beobachtet.

Die durchgeführten Untersuchungen zeigen insgesamt die hervorragende Beständigkeit der nach dem erfindungsgemäßen Verfahren hergestellten Küchen- bzw. Arbeitsplatten gegenüber Wärme- und Feuchtigkeitseinwirkung im Übergangsbereich zwischen dem aufgebrachten Kunststoffprofil und der Versiegelungsmasse, was maßgeblich durch das Einbringen einer Abkantung in den Übergangsbereich einhergehend mit einer Verfüllung dieser Abkantung mit der Versiegelungsmasse bedingt ist. Denn durch die verfüllte Abkantung wird insbesondere die Kontaktfläche zwischen Kunststoffprofil einerseits und Versiegelungsmasse andererseits signifikant erhöht, was maßgeblich zu der erhöhten Beständigkeit gegenüber Wärme- und Feuchtigkeitseinwirkung beiträgt.

## Patentansprüche

1. Verfahren zur Versiegelung eines Übergangsbereichs (ÜB) zwischen einem an einer Schmalseite (2) eines plattenförmigen Werkstoffsubstrats (1) aufzubringenden Kunststoffprofil (4) und einer an einer Flachseite (3) des plattenförmigen Werkstoffsubstrats (1) aufzubringenden Versiegelungsmasse (5), wobei das plattenförmige Werkstoffsubstrat (1) im Übergangsbereich (ÜB) mit einer Abkantung (6) versehen wird und die Abkantung (6) mit der Versiegelungsmasse (5) verfüllt wird, wobei das Kunststoffprofil (4) vor dem Aufbringen auf die Schmalseite (2) auf der auf die Schmalseite (2) aufzubringende Seite des Kunststoffprofils (4) mit einem Haftvermittler versehen wird und wobei das Kunststoffprofil (4) nach Einbringen der Abkantung (6) und vor Verfüllung der Abkantung (6) mit der Versiegelungsmasse (5) auf die Schmalseite (2) aufgebracht wird.

2. Verfahren nach Anspruch 1, wobei die Abkantung sich (6) zumindest im wesentlichen über die gesamte Länge des Werkstoffsubstrats (1) erstreckt oder wobei sich die Abkantung (6) abschnittsweise über die Länge des Werkstoffsubstrats (1) erstreckt und/oder wobei die Abkantung (6) einen zumindest im wesentlichen rechteckigen, insbesondere quadratischen, zumindest im wesentlichen dreieckigen oder zumindest im wesentlichen kreissektorförmigen Querschnitt aufweist und/oder wobei sich die Abkantung (6) über 1 bis 50 %, insbesondere 2 bis 40 %, vorzugsweise 3 bis 30 %, bevorzugt 5 bis 25 %, besonders bevorzugt 10 bis 20 %, der Höhe der Schmalseite (2) erstreckt und/oder wobei sich die Abkantung (6) über 0,1 bis 20 %, insbesondere 0,5 bis 10 %, vorzugsweise 0,75 bis 7,5 %, bevorzugt 1 bis 5 %, der Breite der Flachseite (3) erstreckt.

3. Verfahren nach einem der vorangehenden Ansprüche, wobei die Abkantung (6), unabhängig voneinander, eine Seitenlänge in Richtung der Schmalseite (2) und/oder eine Seitenlänge in Richtung der Flachseite (3) von 0,1 bis 100 mm, insbesondere 0,2 bis 50 mm, vorzugsweise 0,4 bis 25 mm, bevorzugt 0,6 bis 20 mm, besonders bevorzugt 0,8 bis 15 mm, ganz besonders bevorzugt 1 bis 10 mm, aufweist.

4. Verfahren nach einem der vorangehenden Ansprüche, wobei das Werkstoffsubstrat (1) ein Holzwerkstoffsubstrat, insbesondere eine Massivholzplatte, eine Spanplatte, eine MDF-Platte, eine Leichtbauplatte, ist und/oder wobei das Werkstoffsubstrat (1) ein Holzprofil ist und/oder wobei das Werkstoffsubstrat (1) an zumindest einer der Flachseiten (3) eine Beschichtung, insbesondere in Form einer Kunststoffolie oder eines Furniers, vorzugsweise einer Kunststoffolie, aufweist und/oder wobei die Schmalseite (2) des Werkstoffsubstrats (1) eine Höhe von 0,1 bis 15 cm, insbesondere 0,5 bis 12,5 cm, vorzugsweise 1 bis 10 cm, bevorzugt 1,5 bis 7,5 cm, besonders bevorzugt 3 bis 6 cm, aufweist und/oder wobei die Flachseite (3) des Werkstoffsubstrats (1) eine Breite von 1 bis 200 cm, insbesondere 5 bis 150 cm, vorzugsweise 10 bis 125 cm, bevorzugt 20 bis 100 cm, besonders bevorzugt 40 bis 90 cm, aufweist.

5. Verfahren nach einem der vorangehenden Ansprüche, wobei der Haftvermittler, bezogen auf das Trockengewicht des Haftvermittlers, in Mengen von 2 bis 20 g/m², insbesondere 5 bis 15 g/m², vorzugsweise 10 bis 12 g/m², auf das Kunststoffprofil (4) aufgetragen wird und/oder insbesondere wobei als Haftvermittler ein Dispersionsklebstoff oder Schmelzklebstoff, insbesondere ein lösemittelhaltiger oder wäßriger Dispersionsklebstoff, vorzugsweise ein Polyurethan (PU)-Dispersionsklebstoff, eingesetzt wird und/oder insbesondere wobei der Haftvermittler mindestens einen vorzugsweise anorganischen Füllstoff aufweist, insbesondere wobei der Füllstoff, bezogen auf den Haftvermittler, in Mengen von 5 bis 50 Gew.-%, insbesondere 10 bis 40 Gew.-%, vorzugsweise 15 bis 30 Gew.-%, zugegeben wird.

6. Verfahren nach einem der vorangehenden Ansprüche, wobei das Aufbringen des Kunststoffprofils (4) auf die Schmalseite (2) mittels eines Klebstoffes (7) erfolgt, insbesondere wobei als Klebstoff (7) ein extrudierbarer und/oder filmbildender Klebstoff (7), insbesondere ein Schmelzklebstoff oder ein Dispersionsklebstoff, eingesetzt wird.

7. Verfahren nach einem der vorangehenden Ansprüche, wobei als Füllstoff Füllstoffpartikel auf Basis anorganischer Oxide, Hydroxide, Silikate, Carbonate und/oder Sulfate, insbesondere Aluminiumoxide, Siliciumdioxide, Bariumsulfate, Calciumcarbonate, Alkali- und Erdalkalioxide, Titanoxide, Eisenoxide und dergleichen, eingesetzt werden und/oder wobei als Füllstoff vorzugsweise stäbchenförmige oder aber kugelförmige oder nahezu kugelförmige Füllstoffpartikel eingesetzt werden und/oder wobei als Füllstoff Füllstoffpartikel mit einer mittleren Teilchengröße im Bereich von 3 µm bis 20 µm, insbesondere 4 µm bis 10 µm, eingesetzt werden.

8. Verfahren nach einem der vorangehenden Ansprüche, wobei als Versiegelungsmasse (5) ein zumindest im wesentlichen füllstofffreier oder aber allenfalls füllstoffarmer Schmelzklebstoff eingesetzt wird, insbesondere wobei der Gehalt an Füllstoffen, bezogen auf den Schmelzkleber, weniger als 25 Gew.-%, insbesondere weniger als 20 Gew.-%, bevorzugt weniger als 15 Gew.-%, besonders bevorzugt weniger als 5 Gew.-%, besonders bevorzugt weniger als 2 Gew.-%, ganz besonders bevorzugt weniger als 1 Gew.-%, beträgt.

9. Verfahren nach einem der vorangehenden Ansprüche, wobei die Versiegelungsmasse (5) mittels eines Schlitzdüsenverfahrens verfüllt und/oder auf die Flachseite (3) aufgebracht wird und/oder wobei die Versiegelungsmasse (5) aufgebracht wird derart, daß die Abkantung (6) zumindest im wesentlichen vollständig mit der Versiegelungsmasse (5) verfüllt wird, und/oder wobei die Versiegelungsmasse (5) bündig an der auf die Schmalseite (2) aufgebrachten Seite des Kunststoffprofils (4) anliegt und/oder wobei die Versiegelungsmasse (5) mit der auf die Schmalseite (2) aufgebrachten Seite des Kunststoffprofils (4) abdichtend aufgetragen wird.

10. Verfahren nach einem der vorangehenden Ansprüche, wobei die Versiegelungsmasse (5) aufgebracht wird derart, daß zudem ein an der Abkantung (6) angrenzender Bereich der Flachseite (3) des Werkstoffsubstrats (1) mit der Versiegelungsmasse (5) beschichtet wird, insbesondere wobei der mit der Versiegelungsmasse (5) beschichtete Bereich der Flachseite (3) zumindest im wesentlichen parallel zur Abkantung (6) verläuft und/oder insbesondere wobei sich der mit der Versiegelungsmasse (5) beschichtete Bereich der Flachseite (3) über die gesamte Länge des Werkstoffsubstrats (1) erstreckt oder wobei sich der mit der Versiegelungsmasse (5) beschichtete Bereich der Flachseite (3) abschnittsweise über die Länge des Werkstoffsubstrats (1) erstreckt und/oder insbesondere wobei der mit der Versiegelungsmasse (5) beschichtete Bereich eine Breite von 1 bis 50 %, insbesondere 2 bis 40 %, vorzugsweise 3 bis 30 %, bevorzugt 5 bis 25 %, besonders bevorzugt 10 bis 20 %, der Breite der Flachseite (3) aufweist.

## Claims

1. Method for sealing a transition region (ÜB) between a plastics profile (4), which is intended for application on a narrow side (2) of a boardlike material substrate (1), and a sealing composition (5), which is intended for application on a flat side (3) of the boardlike material substrate (1), wherein the boardlike material substrate (1) is provided in the transition region (ÜB) with an angled portion (6) and the angled portion (6) is filled with the sealing composition (5), wherein the plastics profile (4), before being applied to the narrow side (2), is provided with an adhesion promoter on the side of the plastics profile (4) that is intended for application to the narrow side (2), and wherein the plastics profile (4), after introduction of the angled portion (6) and before filling of the angled portion (6) with the sealing composition (5), is applied to the narrow side (2).

2. Method according to Claim 1, wherein the angled portion (6) extends at least substantially over the entire length of the material substrate (1) or wherein the angled portion (6) extends sectionally over the length of the material substrate (1) and/or wherein the angled portion (6) has an at least substantially rectangular, more particularly square, at least substantially triangular or at least substantially circle-sector-shaped cross-section, and/or wherein the angled portion (6) extends over 1 to 50%, more particularly 2 to 40%, preferably 3 to 30%, more preferably 5 to 25%, very preferably 10 to 20%, of the height of the narrow side (2), and/or wherein the angled portion (6) extends over 0.1 to 20%, more particularly 0.5 to 10%, preferably 0.75 to 7.5%, more preferably 1 to 5%, of the width of the flat side (3).

3. Method according to either of the preceding claims, wherein the angled portion (6) has, independently of one another, a side length in the direction of the narrow side (2) and/or a side length in the direction of the flat side (3) of 0.1 to 100 mm, more particularly 0.2 to 50 mm, preferably 0.4 to 25 mm, more preferably 0.6 to 20 mm, very preferably 0.8 to 15 mm, especially preferably 1 to 10 mm.

4. Method according to any of the preceding claims, wherein the material substrate (1) is a wood-based material substrate, more particularly a solid wood board, a chipboard, an MDF board or a lightweight construction board, and/or wherein the material substrate (1) is a wood profile and/or wherein the material substrate (1) has on at least one of the flat sides (3) a coating, more particularly in the form of a plastics foil or of a veneer, preferably a plastics foil, and/or wherein the narrow side (2) of the material substrate (1) has a height of 0.1 to 15 cm, more particularly 0.5 to 12.5 cm, preferably 1 to 10 cm, more preferably 1.5 to 7.5 cm, very preferably 3 to 6 cm, and/or wherein the flat side (3) of the material substrate (1) has a width of 1 to 200 cm, more particularly 5 to 150 cm, preferably 10 to 125 cm, more preferably 20 to 100 cm, very preferably 40 to 90 cm.

5. Method according to any of the preceding claims, wherein the adhesion promoter, based on the dry weight of the adhesion promoter, is applied to the plastics profile (4) in amounts of 2 to 20 g/m², more particularly 5 to 15 g/m², preferably 10 to 12 g/m², and/or especially wherein use is made as adhesion promoter of a dispersion adhesive or hotmelt adhesive, more particularly a solvent-containing or aqueous dispersion adhesive, preferably a polyurethane (PU) dispersion adhesive, and/or especially wherein the adhesion promoter has at least one preferably inorganic filler, especially wherein the filler, based on the adhesion promoter, is added in amounts of 5 to 50 weight%, more particularly 10 to 40 weight%, preferably 15 to 30 weight%.

6. Method according to any of the preceding claims, wherein the plastics profile (4) is applied to the narrow side (2) by means of an adhesive (7), especially wherein use is made as adhesive (7) of an extrudable and/or film-forming adhesive (7), more particularly a hotmelt adhesive or a dispersion adhesive.

7. Method according to any of the preceding claims, wherein use is made as filler of filler particles based on inorganic oxides, hydroxides, silicates, carbonates and/or sulphates, more particularly aluminium oxides, silicon dioxides, barium sulphates, calcium carbonates, alkali metal oxides, alkaline earth metal oxides, titanium oxides, iron oxides and the like, and/or wherein use is made as filler of preferably rodlet-shaped or else spherical or near-spherical filler particles, and/or wherein use is made as filler of filler particles having an average particle size in the range from 3 µm to 20 µm, more particularly 4 µm to 10 µm.

8. Method according to any of the preceding claims, wherein use is made as sealing composition (5) of an at least substantially filler-free or else at most low-filler-content hotmelt adhesive, especially wherein the amount of fillers, based on the hotmelt adhesive, is less than 25 weight%, more particularly less than 20 weight%, preferably less than 15 weight%, more preferably less than 5 weight%, more preferably less than 2 weight%, especially preferably less than 1 weight%.

9. Method according to any of the preceding claims, wherein the sealing composition (5) is applied to the flat side (3) and/or filled by means of a slot die process and/or wherein the sealing composition (5) is applied such that the angled portion (6) is filled at least substantially completely with the sealing composition (5), and/or wherein the sealing composition (5) bears flush to that side of the plastics profile (4) that is applied to the narrow side (2), and/or wherein the sealing composition (5) is applied sealingly with that side of the plastics profile (4) that is applied to the narrow side (2).

10. Method according to any of the preceding claims, wherein the sealing composition (5) is applied such that, furthermore, a region of the flat side (3) of the material substrate (1), said region bordering the angled portion (6), is coated with the sealing composition (5), especially wherein the region of the flat side (3) that is coated with the sealing composition (5) runs at least substantially parallel to the angled portion (6) and/or especially wherein the region of the flat side (3) that is coated with the sealing composition (5) extends over the entire length of the material substrate (1) or wherein the region of the flat side (3) that is coated with the sealing composition (5) extends sectionally over the length of the material substrate (1) and/or especially wherein the region that is coated with the sealing composition (5) has a width of 1 to 50%, more particularly 2 to 40%, preferably 3 to 30%, more preferably 5 to 25%, very preferably 10 to 20%, of the width of the flat side (3).

## Revendications

1. Procédé de scellement d'une zone de transition (ÜB) entre un profilé plastique (4) à appliquer sur un côté étroit (2) d'un substrat de matériau en forme de plaque (1) et une masse de scellement (5) à appliquer sur un côté plat (3) du substrat de matériau en forme de plaque (1), dans lequel on réalise un chanfrein (6) sur le substrat de matériau en forme de plaque (1) dans la zone de transition (ÜB) et on remplit le chanfrein (6) avec la masse de scellement (5), dans lequel on garnit le profilé plastique (4) d'un agent adhésif sur le côté du profilé plastique (4) à appliquer sur le côté étroit (2), avant l'application du profilé plastique (4) sur le côté étroit (2), et dans lequel on applique le profilé plastique (4) sur le côté étroit (2) après la réalisation du chanfrein (6) et avant le remplissage du chanfrein (6) avec la masse de scellement (5).

2. Procédé selon la revendication 1, dans lequel le chanfrein (6) s'étend au moins essentiellement sur toute la longueur du substrat de matériau (1) ou dans lequel le chanfrein (6) s'étend par tronçons sur la longueur du substrat de matériau (1) et/ou dans lequel le chanfrein (6) présente une section transversale au moins essentiellement rectangulaire, en particulier carrée, au moins essentiellement triangulaire ou au moins essentiellement en forme de secteur de cercle et/ou dans lequel le chanfrein (6) s'étend sur 1 à 50 %, en particulier sur 2 à 40 %, de préférence sur 3 à 30 %, de préférence encore sur 5 à 25 %, et de préférence enfin sur 10 à 20 % de la hauteur du côté étroit (2) et/ou dans lequel le chanfrein (6) s'étend sur 0,1 à 20 %, en particulier sur 0,5 à 10 %, de préférence sur 0,75 à 7,5 %, de préférence encore sur 1 à 5 %, de la largeur du côté plat (3).

3. Procédé selon l'une quelconque des revendications précédentes, dans lequel le chanfrein (6) présente, de façon indépendante l'un de l'autre, une longueur de côté dans la direction du côté étroit (2) et/ou une longueur de côté dans la direction du côté plat (3) de 0,1 à 100 mm, en particulier de 0,2 à 50 mm, de préférence de 0,4 à 25 mm, de préférence encore de 0,6 à 20 mm, de préférence en outre de 0,8 à 15 mm, et de préférence enfin de 1 à 10 mm.

4. Procédé selon l'une quelconque des revendications précédentes, dans lequel le substrat de matériau (1) est un substrat en matériau dérivé du bois, en particulier une plaque en bois massif, une plaque de copeaux agglomérés, une plaque MDF, une plaque de construction légère, et/ou dans lequel le substrat de matériau (1) est un profilé en bois et/ou dans lequel le substrat de matériau (1) présente sur au moins un des côtés plats (3) un revêtement, en particulier sous la forme d'un film de plastique ou d'une feuille de placage, de préférence d'un film de plastique, et/ou dans lequel le côté étroit (2) du substrat de matériau (1) présente une hauteur de 0,1 à 15 cm, en particulier de 0,5 à 12,5 cm, de préférence de 1 à 10 cm, de préférence encore de 1,5 à 7,5 cm, et de préférence enfin de 3 à 6 cm, et/ou dans lequel le côté plat (3) du substrat de matériau (1) présente une largeur de 1 à 200 cm, en particulier de 5 à 150 cm, de préférence de 10 à 125 cm, de préférence encore de 20 à 100 cm, et de préférence enfin de 40 à 90 cm.

5. Procédé selon l'une quelconque des revendications précédentes, dans lequel on applique l'agent adhésif, rapporté au poids de l'agent adhésif sec, en des quantités de 2 à 20 g/m², en particulier de 5 à 15 g/m², de préférence de 0 à 12 g/m², sur le profilé plastique (4) et/ou dans lequel on utilise comme agent adhésif une colle à dispersion ou une colle fusible, en particulier une colle à dispersion contenant un solvant ou de l'eau, de préférence une colle à dispersion au polyuréthane (PU), et/ou en particulier dans lequel l'agent adhésif présente au moins une matière de charge de préférence inorganique, en particulier dans lequel on ajoute la matière de charge, rapportée à l'agent adhésif, en des quantités de 5 à 50 % en poids, en particulier de 10 à 40 % en poids, de préférence de 15 à 30 % en poids.

6. Procédé selon l'une quelconque des revendications précédentes, dans lequel on effectue l'application du profilé plastique (4) sur le côté étroit (2) au moyen d'une colle (7), en particulier dans lequel on utilise comme colle (7) une colle (7) à extruder et/ou filmogène, en particulier une colle fusible ou une colle à dispersion.

7. Procédé selon l'une quelconque des revendications précédentes, dans lequel on utilise comme matière de charge des particules de matière de charge à base d'oxydes, d'hydroxydes, de silicates, de carbonates et/ou de sulfates inorganiques, en particulier des oxydes d'aluminium, des dioxydes de silicium, des sulfates de baryum, des carbonates de calcium, des oxydes alcalins et alcalino-terreux, des oxydes de titane, des oxydes de fer et analogues, et/ou dans lequel on utilise comme matière de charge des particules de matière de charge de préférence en forme de barrettes ou de forme sphérique ou presque sphérique, et/ou dans lequel on utilise comme matière de charge des particules de matière de charge présentant une taille moyenne de particules comprise dans la plage de 3 µm à 20 µm, en particulier de 4 µm à 10 µm.

8. Procédé selon l'une quelconque des revendications précédentes, dans lequel on utilise comme masse de scellement (5) une colle fusible au moins essentiellement libre de matière de charge ou en tout cas pauvre en matière de charge, en particulier dans lequel la teneur en matière de charge, rapportée à la colle fusible, est inférieure à 25 % en poids, en particulier inférieure à 20 % en poids, de préférence inférieure à 15 % en poids, de préférence encore inférieure à 5 % en poids, de préférence particulièrement inférieure à 2 % en poids et de préférence enfin inférieure à 1 % en poids.

9. Procédé selon l'une quelconque des revendications précédentes, dans lequel on introduit la masse de scellement (5) et/ou on l'applique sur le côté plat (3) au moyen d'un procédé à buse fendue et/ou dans lequel on applique la masse de scellement (5) de telle manière que le chanfrein (6) soit rempli au moins sensiblement entièrement avec la masse de scellement (5) et/ou dans lequel la masse de scellement (5) est posée à fleur du côté du profilé plastique (4) appliqué sur le côté étroit (2) et/ou dans lequel on applique la masse de scellement (5) de façon étanche avec le côté du profilé plastique (4) appliqué sur le côté étroit (2).

10. Procédé selon l'une quelconque des revendications précédentes, dans lequel on applique la masse de scellement (5) de telle manière qu'une zone du côté plat (3) du substrat de matériau (1) adjacente au chanfrein (6) soit en plus revêtue avec la masse de scellement (5), en particulier dans lequel la zone du côté plat (3) revêtue avec la masse de scellement (5) s'étend au moins sensiblement parallèlement au chanfrein (6) et/ou en particulier dans lequel la zone du côté plat (3) revêtue avec la masse de scellement (5) s'étend sur toute la longueur du substrat de matériau (1) ou dans lequel la zone du côté plat (3) revêtue avec la masse de scellement (5) s'étend par tronçons sur la longueur du substrat de matériau (1) et/ou en particulier dans lequel la zone revêtue avec la masse de scellement (5) présente une largeur de 1 à 50 %, en particulier de 2 à 40 %, de préférence de 3 à 30 %, de préférence encore de 5 à 25 %, et de préférence enfin de 10 à 20 %, de la largeur du côté plat (3).
